# FASCICULE DE BREVET EUROPEEN

(11) **EP 2 027 448 B1**
(45) Date de publication et mention de la délivrance du brevet: **12.07.2017**
(21) Numéro de dépôt: 07729672.1
(22) Date de dépôt: 30.05.2007
(51) Int. Cl.: F41H 1/02, F41A 31/00

(54) **PROCÉDÉ DE CONCEPTION DE VÊTEMENTS OU ÉQUIPEMENTS DE PROTECTION POUR LE MAINTIEN DE L'ORDRE, ET PROCÉDÉ D'HOMOLOGATION DE TELS VÊTEMENTS OU ÉQUIPEMENTS**
VERFAHREN ZUM ENTWERFEN VON KLEIDUNG UND AUSRÜSTUNG ZUR DURCHSETZUNG VON GESETZEN UND VERFAHREN ZUR GENEHMIGUNG SOLCHER KLEIDUNG UND AUSRÜSTUNG
METHOD FOR DESIGNING CLOTHING AND EQUIPMENT FOR LAW ENFORCEMENT, AND THE METHOD FOR HOMOLOGATING SUCH CLOTHING AND EQUIPMENT

(30) Priorité: 30.05.2006 FR 0604796; 15.06.2006 FR 0605328; 16.11.2006 FR 0610021
(43) Date de publication de la demande: 25.02.2009
(73) Titulaire: Protecop, 75008 Paris (FR)
(72) Inventeur: LE CARPENTIER, Jérôme, F-27270 Broglie (FR)
(74) Mandataire: Eidelsberg, Olivier Nathan
(86) Numéro de dépôt international: PCT/EP2007/055259
(87) Numéro de publication internationale: WO 2007/138080

(56) Documents cités:
- EP-A- 1 459 854
- WO-A-00/24276
- WO-A-95/18655
- US-A1- 4 453 271
- US-A1- 5 325 537

## Description

La présente invention concerne d'une façon générale la conception d'équipements de protection pour les forces de maintien de l'ordre.

On entend ici par équipements de protection pour les forces de maintien de l'ordre tout habillement ou équipement porté par l'utilisateur pour réduire ou empêcher le risque de dommages corporel spécifiques. De tels équipements de protection sont connus de l'état de la technique. A titre d'exemple, le document WO 00/24276 décrit un ensemble d'équipements offrant une protection contre des projections liquides. Les documents US 4 453 271 et US 5 325 537 décrivent des équipements destinés à amortir des chocs ou des coups dans le domaine sportif.

Traditionnellement, des équipements de protection de cette nature sont conçus de façon essentiellement empirique : plusieurs prototypes sont réalisés et testés dans des conditions réelles de port de l'équipement ou proches des conditions réelles (en prenant soin de ne pas exercer de sollicitations trop importantes sur la personne effectuant le test).

Par ailleurs, le document WO 95/18655 propose un mannequin de taille humaine propre à mesurer des coups qui lui sont portés, présentant plusieurs capteurs de pression sur les zones destinées à recevoir ces coups, ces capteurs pouvant délivrer un signal électrique à un ordinateur pour rendre compte de la force de ces coups ou de la taille de la surface des capteurs qui a été impactée. En revanche, ce document ne prévoit pas d'utilisation dudit mannequin avec des équipements ou vêtements de protection dans le but de concevoir ou d'homologuer lesdits équipements. Enfin, le document EP 1 459 854 décrit un dispositif amortisseur de chocs configuré pour être placé sous le pied d'une jambe mécanique d'un robot. La présente invention vise à pallier ces limitations de l'état de l'art, et à proposer des procédés qui permettent, en assurant notamment une mesurabilité précise et reproductible de l'effet de protection de vêtements ou équipements de protection sur le corps humain, de faciliter la conception de tels vêtements ou équipements en fonction d'un objectif de protection souhaité, d'améliorer leur fiabilité et d'offrir aux utilisateurs une gamme de vêtements ou équipements pouvant offrir différents degrés de protection, en fonction des besoins.

Ainsi l'invention vise à mettre en oeuvre une approche scientifique d'évaluation d'équipement de maintien de l'ordre, débouchant sur l'expression normée d'une évaluation en terme de traumatologie, facile à lire par le client en ce qu'elle lui permet de faire un choix objectif entre tel type et tel type de matériel par rapport à un niveau de protection étalonné, en commençant par exemple par un bâton et en allant jusqu'à une hache.

A cet effet, l'invention propose selon un premier aspect un procédé de conception d'un vêtement ou d'un équipement de protection du corps pour les forces de l'ordre, caractérisé en ce qu'il comprend les étapes suivantes :
- équiper un mannequin d'un ensemble de capteurs cinématiques et/ou dynamométriques,
- positionner un dispositif d'application d'impacts de manière à ce que celui-ci puisse appliquer sur au moins une zone cible prédéterminée du mannequin des impacts selon une cinématique reproductible déterminée,
- appliquer lesdits impacts sur la zone cible du mannequin dépourvue de vêtement ou équipement de protection, et relever les mesures fournies par le ou les capteurs situés dans la région desdites zones cibles,
- monter un vêtement ou équipement de protection sur le mannequin de manière à ce qu'il couvre la zone cible,
- appliquer lesdits impacts sur la zone cible du mannequin pourvue du vêtement ou équipement de protection, et relever les mesures fournies par le ou lesdits capteurs,
- déduire des mesures au moins une valeur d'énergie absorbée et/ou d'atténuation de force par ledit vêtement ou équipement de protection, et - si
la ou lesdites valeurs sont supérieures à des valeurs seuils, désigner le vêtement ou équipement comme acceptable au sens desdits seuils, - dans le cas contraire, apporter des modifications structurelles audit vêtement ou équipement de protection en vue d'améliorer lesdites valeurs d'énergie absorbée et/ou d'atténuation de force.

On propose également, selon un deuxième aspect de l'invention, un procédé de test d'homologation d'un vêtement ou d'un équipement de protection du corps pour les forces de l'ordre, caractérisé en ce qu'il comprend les étapes suivantes :
- équiper un mannequin d'un ensemble de capteurs cinématiques et/ou dynamométriques,
- positionner un dispositif d'application d'impacts de manière à ce que celui-ci puisse appliquer sur au moins une zone cible prédéterminée du mannequin, susceptible d'être protégée par le vêtement ou équipement à tester, des impacts selon une cinématique reproductible déterminée,
- appliquer lesdits impacts sur la zone cible du mannequin dépourvue du vêtement ou équipement à tester, et relever les mesures fournies par le ou les capteurs situés dans la région desdites zones cibles,
- monter le vêtement ou équipement de protection à tester sur le mannequin de manière à ce qu'il couvre la zone cible, - appliquer lesdits impacts sur la zone cible du mannequin pourvue dudit vêtement ou équipement, et relever les mesures fournies par le ou lesdits capteurs,
- déduire des mesures au moins une valeur d'énergie absorbée et/ou d'atténuation de force par ledit vêtement ou équipement de protection, et - si la ou lesdites valeurs sont supérieures à des valeurs seuils, désigner le vêtement ou équipement comme homologué.

Certains aspects préférés, mais non limitatifs, de ces procédés sont les suivants :
* le procédé comprend en outre une étape de détermination desdites valeurs seuils en fonction de données numériques reflétant la relation entre traumatismes et des valeurs de force et ou d'énergie appliquées directement sur des zones déterminées du corps humain.
* les impacts sont appliqués à l'aide d'un pendule orthofilaire portant un support pour un impacteur.
* le support comporte au moins un capteur cinématique ou dynamométrique.
* les mesures fournies par le ou les capteurs sont choisies dans un groupe comprennent des mesures de déplacement, des mesures de vitesse, des mesures d'accélération, des mesures de force, et leurs évolutions en fonction du temps.
* les impacts sont appliqués avec un impacteur présentant une forme choisie parmi les formes arrondies ou à arêtes vives.
* les impacts sont appliqués selon au moins deux angles d'incidence différents.
* l'une des incidences est généralement orthogonale à la surface du mannequin au niveau de la cible.
* les impacts sont appliqués sur le mannequin dans plusieurs postures différentes de celui-ci.
   pour un équipement de protection de type jambière, on appuie la jambe du mannequin équipée d'une chaussure sur une surface d'essai réaliste de manière à simuler les forces de frottement entre le mannequin et le sol.
* le mannequin est un mannequin partiel avec au moins une jambe articulée pourvue d'une chaussure et assujettie à un poids pour s'appuyer contre une surface d'essai reproduisant un sol réel.
* les impacts sont appliqués avec un impacteur pourvu d'une arête vive.
* le procédé comprend la mesure de l'enfoncement de l'impacteur dans la matière du vêtement ou équipement.
* les vêtements et équipements de protection sont choisis dans le groupe comprenant les jambières, les protège-cuisse, les gilets, et les protège-épaule, les manchettes. D'autres aspects, buts et avantages de la présente invention apparaîtront mieux à la lecture de la description détaillée suivante des formes de réalisation préférée de celle-ci, donnée à titre d'exemple non limitatif et faite en référence aux dessins annexés, sur lesquels :
   La figure 1 est un schéma d'ensemble d'un équipement de test selon l'invention,
   Les figures 2a et 2b sont des vues de côté et en bout d'un premier type d'impacteur utilisé dans l'équipement de test, et
   Les figures 3a et 3b sont des vues de côté et en bout d'un deuxième type d'impacteur utilisé dans l'équipement de test.

### 1) Définitions

a) Zone de protection : secteur du corps humain recouvert par l'ensemble d'un vêtement ou d'un équipement de protection et de ses accessoires ;
b) zone de test : partie ou zone (s) d'un vêtement ou d'un équipement de protection qui doit être examinée en particulier ;
c) cibles : régions anatomiques du corps humain sur lesquelles un coup est visé ; parmi ces cibles :
   - les cibles primaires sont généralement considérées comme les avant-bras, les fesses, les cuisses, le dos du talon et le cou-de-pied ; ce sont principalement des secteurs où les masses de muscle protègent les éléments squelettiques et qui sont dépourvues d' organes vitaux ; - les cibles secondaires sont généralement considérées comme le dos des mains, l'intérieur des poignets, les joints des coudes, les bras supérieurs, les épaules, les lames d'épaules, l'os de collier et les joints des genoux ;
   - enfin les cibles tertiaires sont généralement considérées comme chaque partie du visage, du crâne, du cou, la région de l'épine dorsale et de la nervure, le secteur juste au-dessous de la région de la nervure, l'ensemble du foie, le plexus solaire, la rate, les reins, l'abdomen inférieur, l'aine et le coccyx.
d) incidence d'un coup : elle est définie par l'angle de frappe par rapport à un axe normal à la surface générale de la cible (axe z), la valeur de 0[deg.] correspondant à un choc frontal ;
e) niveaux de performance : le niveau de performance d'un vêtement ou d'un équipement est un nombre utilisé pour donner un indication du degré de protection procuré par le vêtement ou l'équipement, tel que déterminé par les tests de performances tels qu'on les décrira dans la suite ; plus le nombre est élevé, plus le degré de performance est élevé.

### 2) Description de l'équipement

La présente invention vise à concevoir et à tester en vue d'une homologation officielle ou privée des vêtements ou équipements de protection du corps humain en proposant un appareil de test permettant la mesure de la diminution de l'énergie et de la force d'impact sur un tel vêtement ou équipement, ceci sous l'effet d'un impacteur simulant un coup réel.
Par exemple, un tel impacteur peut simuler un coup avec une batte de baseball ou avec une hache.

Cet appareil de test comprend dans une forme de réalisation avantageuse :
- un mannequin biomécanique M ;
- un banc d'essai comprenant un pendule orthofilaire P;
- un impacteur I (ici la batte de baseball ou la hache) monté sur le pendule.

Le mannequin M simule, dans les limites de sa précision, un être humain de sexe masculin, d'une taille de 175 cm et d'un poids de 80 kg. Il est instrumenté, à savoir équipé d'un ensemble de capteurs de force, de capteurs de moment, de capteurs de déplacement et de capteurs d'accélération.

Dans le présent exemple de réalisation, on utilise un mannequin M ayant les caractéristiques suivantes :
- Hybrid III en frontal, possédant deux voies à savoir un capteur de déplacement et un accéléromètre ; jambe instrumentée en frontal à cinq voies, à savoir deux capteurs de force, deux capteurs de moment et un accéléromètre ;
- fémur instrumenté en frontal à quatre voies selon la norme EuroSID-2, avec deux capteurs de force, un capteur de moment et un accéléromètre ; épaule instrumentée en latéral à quatre voies selon la norme EuroSID-2, avec trois capteurs de force et un accéléromètre. On notera que ces définitions normalisées de mannequins issues en particulier des activités encadrées légalement de crash-test automobile, sont accessibles avec tous les détails d'implémentation nécessaires à l'homme du métier auprès des instances officielles concernées (voir en particulier le site Internet de l'Institut National de Recherche sur les Transports et leur Sécurité).

Un tel mannequin est équipé du vêtement ou équipement de protection à tester. Le banc d'essai de l'appareil de test est ici un pendule orthofilaire P sur lequel l'impacteur I est fixé. Un tel pendule simule la frappe sur un individu à l'aide de cet impacteur. Le pendule présente une longueur de corde par exemple de 5 mètres, qui est avantageusement réglable.

La position de départ et la masse de l'impacteur déterminent de façon répétable sa vitesse d'impact sur le mannequin, la force transmise au mannequin et l'énergie d'impact. Comme on l'a indiqué plus haut, l'impacteur peut être de l'un parmi deux types dans la présente forme de réalisation, à savoir une batte de baseball ou une hache. Dans tous les cas, l'impacteur comprend une base support S ou armature métallique (typiquement en acier) équipée d'un accéléromètre et d'un capteur de vitesse.
La masse minimale de cette base S est typiquement de 2,5 kg.

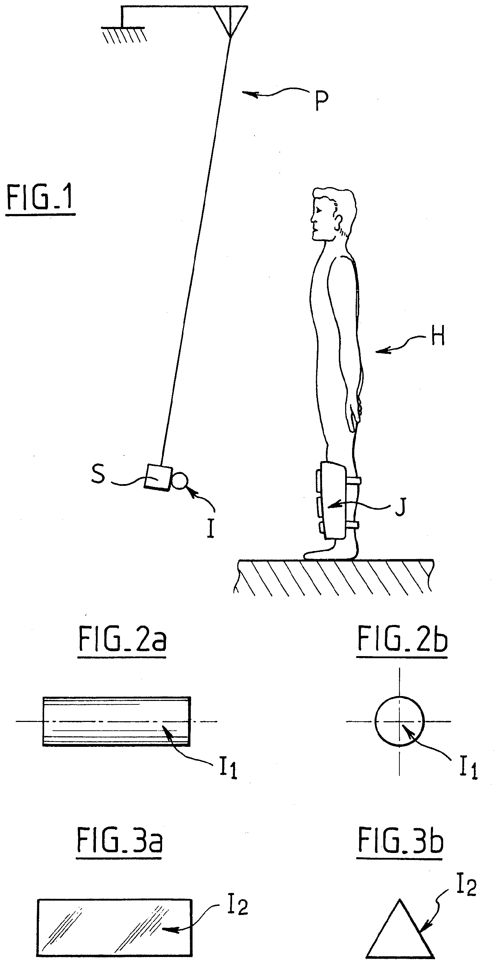

On peut fixer sur cette base un embout de forme adaptée formant l'impacteur proprement-dit I pour simuler la menace souhaitée, à savoir ici un embout simulant la partie la plus corpulente d'une batte de baseball ou simulant la lame d'une hache (mais en variante toute autre forme d'impacteur censée refléter le type de menace - tel que canne de bambou, machette, serpette, etc.).
Dans le présent mode de réalisation particulier, l'embout II simulant une batte de baseball est illustré sur les figures 2a et 2b. Il comprend un fût cylindrique en acier massif, d'une longueur de 200 mm et d'un diamètre de 50 mm, et d'une dureté Rockwell de 55 +/-3 (acier de type C).
L'embout 12 simulant une lame de hache est constitué quant à lui par une barre d'acier, de dureté identique, présentant une section en forme générale de triangle équilatéral de 5 mm de côté et d'une longueur de 200 mm, comme illustré sur les figures 3a et 3b des dessins.
Bien entendu, d'autres types d'impacteurs peuvent également utilisés, et notamment un impacteur simulant l'impact d'un bâton de défense de type tonfa, d'une barre de fer, etc.

### 3) Description de l'utilisation de l'équipement

L'appareil de test selon l'invention s'utilise de la façon suivante. On place tout d'abord l'un des deux modèles d'impacteur monté sur sa base sur le pendule orthofilaire, l'ensemble étant positionné et maintenu de façon à atteindre l'énergie, la vitesse d'impact et la force désirées. Ce maintien est réalisé de façon à être parfaitement reproductible pour que l'impacteur puisse toucher la cible respectivement équipée de sa protection et dépourvue de sa protection dans les mêmes conditions.

Les vêtements ou équipements de protection à tester sont tout d'abord soumis à un étuvage pendant une durée de 4 h à 80°C, puis stockés à 20°C pendant 48 h avec un taux d'humidité relative de 65%.

Dans le cas où le test du vêtement ou de l'équipement doit s'effectuer dans des conditions de température ou d'humidité différentes, alors il est de préférence effectué dans les 5 minutes suivant le déstockage, et durer 20 minutes au plus.

Le vêtement ou équipement de protection à tester est placé sur le mannequin tel que décrit plus haut, de façon à reproduire au mieux les conditions réelles. Typiquement, ce vêtement ou équipement est positionné sur le mannequin et mis en contact avec lui avec une force de contact d'environ 20 à 30 N dans le cas où cette force peut être mesurée ou estimée. Le mannequin est ensuite placé sur le banc d'essai en étant positionné de manière à simuler le port réel du vêtement ou de l'équipement en situation de maintien de l'ordre.

Les procédures de test peuvent alors être effectuées, le choix initial résidant dans les valeurs souhaitées de vitesse d'impact, d'énergie d'impact et de force maximale transmise (en fait le choix d'un angle d'incidence) comme on l'a déjà indiqué.
Par exemple on peut effectuer des tests avec l'embout de type batte de baseball avec les paramètres suivants :
- vitesse d'impact : 5 m/s
- énergie d'impact : 120 Joules
- incidence : 0[deg.] et 30[deg.] et avec l'embout de type hache avec les paramètres suivants :
- vitesse d'impact : 5 m/s
- énergie d'impact : 50 Joules
- incidence : 0 [deg.].
On comprend que ces paramètres peuvent varier en fonction du type de menace auquel le porteur sera le plus communément exposé notamment dans des situations de maintien de l'ordre.
Par ailleurs, on utilise avantageusement une force moyenne transmise différente en fonction de la cible envisagée, avec par exemple une valeur inférieure à 5 kN pour le coude ou la cuisse, une valeur inférieure à 8 kN pour le haut du bras, l'avant-bras ou le tibia, et une valeur inférieure à 10 kN pour l'épaule et le genou.
Les tests sont réalisés sur les différentes cibles du mannequin et en particulier :
- sur une jambière montée fixée sur une jambe du mannequin entre le genou (inclus) et la cheville, avec des cibles sur le dessus du pied, le bas du tibia, le milieu du tibia, le haut du tibia et le genou ; - sur un protège-cuisse fixé sur la cuisse du mannequin entre la hanche et le genou non inclus, avec des cibles sur le bas de la cuisse, le milieu de la cuisse et le haut de la cuisse ;
- sur un gilet fixé sur le tronc du mannequin et équipé de coques articulées de protection des épaules et du haut des bras supérieurs ainsi que d'une bavette pour zone pelvienne, avec des cibles au coin de l'épaule, sur le haut du bras supérieur, sur le plexus solaire, sur les reins, sur les clavicules et sur la zone pelvienne ;
- sur un protège-épaule à coques articulées monté sur l'épaule (éventuellement retenu par un gilet comme précédemment), avec des cibles au coin de l'épaule et sur le bras supérieur ; sur une manchette montée sur un avant-bras du mannequin, avec des cibles au poignet, sur deux régions de l'avant-bras et au coude.

Bien entendu, d'autres tests sont possibles sur d'autres équipements ou vêtements de protection.

La procédure de test proprement-dite consiste à placer le mannequin, dépourvu de tout vêtement ou équipement de protection, sur une surface d'essai telle qu'une table ou plus généralement tout autre support fixe capable de retenir le mannequin. Avantageusement, on place le mannequin debout sur une surface d'essai reproduisant le terrain réel (typiquement bitume ou ciment pour la protection des forces de l'ordre en milieu urbain). Comme on l'a indiqué, la position du mannequin est réglée pour correspondre à une situation réaliste correspondant au test. Par exemple, pour un test de jambière, la position du mannequin simule un homme debout, et la pression de contact entre le pied du mannequin et la surface d'essai est ajustée pour correspondre à celle qui serait obtenue avec un homme de poids normal ; les capteurs sont étalonnés, d'une façon connue en soi dans le domaine des tests de sécurité automobile. La position du mannequin est également réglée pour que l'angle d'incidence (frappe orthogonale ou oblique - voir plus haut) soit celui souhaité.

Le pendule orthofilaire est ensuite réglé, et plus précisément le point de départ et la charge de l'impacteur (masse de la partie mobile) sont ajustés de façon à obtenir la vitesse, la force et l'énergie d'impact souhaitées. Un repérage est effectué pour que ce point de départ, pour une série d'essais donnée, puisse être déterminé de façon reproductible. Les tests sur les cibles présélectionnées sont alors effectués, tout d'abord sur le mannequin dépourvu du vêtement ou équipement de protection.

Puis le vêtement ou l'équipement est placé sur la zone correspondante du mannequin, et les tests sont effectués à nouveau avec les mêmes vitesses, forces et énergies.

Préférentiellement chaque test individuel, sans protection puis avec protection, comprend une mesure de l'accélération (en m/s<2>) en fonction du temps (en s), de l'effort (en daN) en fonction du temps (en s) et du déplacement (en m) en fonction du temps au niveau des capteurs instrumentant le mannequin.

Chaque test comprend également une mesure, sur l'impacteur, de l'accélération (en m/s<2>) en fonction du temps (en s).

De façon préférée, lors d'un test sur jambière, on effectue d'abord un test en plaçant la jambe du mannequin de façon qu'elle ne puisse pas reculer (à l'aide d'une cale), puis un test dans lequel la jambe est autorisée à reculer (sachant qu'il est alors important d'obtenir des forces de frottement réalistes entre le pied et le sol, ce que permet l'emploi d'un matériau de type bitume ou ciment pour la surface d'essai).

En outre, les différents tests sont avantageusement effectués dans plusieurs positions différentes du mannequin, typiquement une position d'attaque, une position de défense et une position statique.

L'ensemble des mesures ci-dessus est effectué avec l'impacteur simulant une batte de baseball.

Comme on l'a indiqué plus haut, d'autres essais avec un des impacteurs simulant par exemple un tonfa ou une barre de fer peuvent être effectués, avec dans ce cas une procédure similaire à celle utilisée avec l'impacteur simulant une batte de baseball. Les données fournies par les capteurs avec lors des tests avec les différents impacteurs sur les différentes cibles sont enregistrées. On obtient ainsi une série de mesures qui permet aux concepteurs des équipements et des vêtements de progressivement améliorer le comportement de ceux-ci.

Plus précisément, ces données enregistrées sont retraitées, notamment en comparant les données recueillies lors des impacts directement sur le mannequin (sans la protection) et lors des impacts sur la protection placée sur le mannequin. On peut ainsi calculer notamment un coefficient d'absorption d'énergie ainsi qu'un coefficient d'atténuation de la force transmise aux différents points cible. La campagne de tests comprend également l'utilisation de l'impacteur simulant une hache. Dans ce cas, aucune mesure n'est relevée au niveau des capteurs, mais on mesure simplement, de façon manuelle, la profondeur d'enfoncement de la lame. A cet effet, l'équipement ou le vêtement de protection est positionné non pas sur le mannequin, mais sur une enclume rigide et fixe, et l'impacteur de type hache est appliqué avec la force, la vitesse et l'énergie souhaitées. Le processus de validation de la conception d'un vêtement ou équipement de protection peut être basée sur la comparaison de ces coefficients avec des seuils préétablis, selon des règles de calcul qui peuvent être tout à fait variées (par cible, de façon globale, etc.). Avantageusement, ces valeurs seuils sont basées sur des données numériques médicales, fournies notamment par des praticiens ou experts spécialistes en traumatologie, reflétant la relation entre traumatismes et des valeurs de force et ou d'énergie appliquées directement sur des zones déterminées du corps humain. Plus précisément et en ce qui concerne par exemple les fractures osseuses, on sait aujourd'hui de façon relativement précise pour un certain nombre de régions du corps humain, quel niveau de force et/ou d'énergie est susceptible d'aboutir à une fracture osseuse.

A partir de là, la valeur seuil minimale pour une absorption par l'équipement ou vêtement de protection dans une certaine zone du corps est obtenu par différence entre la force et/ou l'énergie effectivement appliquée par le dispositif d'application d'impacts et la force et/ou l'énergie maximale qui peut être reçue par la zone considérée sans qu'un certain traumatisme (fracture, mais également d'autres formes de traumatismes) ne risque d'apparaître. Le concepteur peut jouer notamment sur la nature et les propriétés mécaniques des matériaux mis en jeu (matières plastiques rigides, toiles mousses) et sur leurs paramètres dimensionnels, principalement en termes d'épaisseur.

Bien entendu, l'homme du métier saura apporter à l'invention de nombreuses variantes et modifications. En particulier, afin de simplifier la mise en oeuvre de l'invention dans le cas où l'on s'intéresse à un équipement de protection particulier, on peut concevoir un mannequin instrumenté partiel. Par exemple, pour tester des jambières, on peut prévoir deux jambes artificielles articulées au niveau du genou, et un poids par exemple de 40 kg sur chaque jambe. Les jambes sont alors équipées de chaussures de manière à avoir avec la surface d'essai choisie les forces de frottement recherchées. Plus généralement, l'homme du métier saura effectuer les adaptations nécessaires pour reproduire de façon réaliste les conditions dans lesquelles opèrent les forces de maintien de l'ordre et donc obtenir des tests fiables.

## Revendications

1. Procédé de conception d'un vêtement ou d'un équipement de protection du corps pour les forces de l'ordre, comprenant les étapes suivantes :
- équiper un mannequin (M) d'un ensemble de capteurs cinématiques et/ou dynamométriques,
- positionner un dispositif d'application d'impacts (I) de manière à ce que celui-ci puisse appliquer sur au moins une zone cible prédéterminée du mannequin (M) des impacts selon une cinématique reproductible déterminée,
- appliquer lesdits impacts sur la zone cible du mannequin (M) dépourvue de vêtement ou équipement de protection, et relever les mesures fournies par le ou les capteurs situés dans la région desdites zones cibles,
le procédé étant **caractérisé en outre en ce qu'**il comprend les étapes supplémentaires suivantes :
- monter un vêtement ou équipement de protection sur le mannequin (M) de manière à ce qu'il couvre la zone cible,
- appliquer lesdits impacts sur la zone cible du mannequin (M) pourvue du vêtement ou équipement de protection, et relever les mesures fournies par le ou lesdits capteurs,
- déduire des mesures au moins une valeur d'énergie absorbée et/ou d'atténuation de force par ledit vêtement ou équipement de protection, et
- si la ou lesdites valeurs sont supérieures à des valeurs seuils, désigner le vêtement ou équipement comme acceptable au sens desdits seuils,
- dans le cas contraire, apporter des modifications structurelles audit vêtement ou équipement de protection en vue d'améliorer lesdites valeurs d'énergie absorbée et/ou d'atténuation de force.

2. Procédé de test d'homologation d'un vêtement ou d'un équipement de protection du corps pour les forces de l'ordre, comprenant les étapes suivantes :
- équiper un mannequin (M) d'un ensemble de capteurs cinématiques et/ou dynamométriques,
- positionner un dispositif d'application d'impacts de manière à ce que celui-ci puisse appliquer sur au moins une zone cible prédéterminée du mannequin (M), susceptible d'être protégée par le vêtement ou équipement à tester, des impacts selon une cinématique reproductible déterminée,
- appliquer lesdits impacts sur la zone cible du mannequin (M) dépourvue du vêtement ou équipement à tester, et relever les mesures fournies par le ou les capteurs situés dans la région desdites zones cibles,
le procédé étant **caractérisé en outre en ce qu'**il comprend les étapes supplémentaires suivantes :
- monter le vêtement ou équipement de protection à tester sur le mannequin (M) de manière à ce qu'il couvre la zone cible,
- appliquer lesdits impacts sur la zone cible du mannequin (M) pourvue dudit vêtement ou équipement, et relever les mesures fournies par le ou lesdits capteurs,
- déduire des mesures au moins une valeur d'énergie absorbée et/ou d'atténuation de force par ledit vêtement ou équipement de protection, et
- si la ou lesdites valeurs sont supérieures à des valeurs seuils, désigner le vêtement ou équipement comme homologué.

3. Procédé selon l'une des revendications 1 et 2, **caractérisé en ce qu'**il comprend en outre une étape de détermination desdites valeurs seuils en fonction de données numériques reflétant la relation entre des traumatismes et des valeurs de force et ou d'énergie appliquées directement sur des zones déterminées du corps humain.

4. Procédé selon l'une des revendications 1 à 3, **caractérisé en ce que** les impacts sont appliqués à l'aide d'un pendule orthofilaire (P) portant un support (S) pour un impacteur (I).

5. Procédé selon la revendication 4, **caractérisé en ce que** le support (S) comporte au moins un capteur cinématique ou dynamométrique.

6. Procédé selon l'une des revendications 1 à 5, **caractérisé en ce que** les mesures fournies par le ou les capteurs sont choisies dans un groupe comprennent des mesures de déplacement, des mesures de vitesse, des mesures d'accélération, des mesures de force, et leurs évolutions en fonction du temps.

7. Procédé selon l'une des revendications 1 à 6, **caractérisé en ce que** les impacts sont appliqués avec un impacteur (I) présentant une forme choisie parmi les formes arrondies ou à arêtes vives.

8. Procédé selon la revendication 7, **caractérisé en ce que** les impacts sont appliqués selon au moins deux angles d'incidence différents.

9. Procédé selon la revendication 8, **caractérisé en ce que** l'une des incidences est généralement orthogonale à la surface du mannequin (M) au niveau de la cible.

10. Procédé selon l'une des revendications 1 à 9, **caractérisé en ce que** les impacts sont appliqués sur le mannequin (M) dans plusieurs postures différentes de celui-ci.

11. Procédé selon l'une des revendications 1 à 10, **caractérisé en ce que**, pour un équipement de protection de type jambière (J), on appuie la jambe du mannequin (M) équipée d'une chaussure sur une surface d'essai réaliste de manière à simuler les forces de frottement entre le mannequin (M) et le sol.

12. Procédé selon la revendication 11, **caractérisé en ce que** le mannequin (M) est un mannequin partiel avec au moins une jambe articulée pourvue d'une chaussure et assujettie à un poids pour s'appuyer contre une surface d'essai reproduisant un sol réel.

13. Procédé selon l'une des revendications 1 à 12, **caractérisé en ce que** les impacts sont appliqués avec un impacteur (I) pourvu d'une arête vive.

14. Procédé selon la revendication 13, **caractérisé en ce qu'**il comprend la mesure de l'enfoncement de l'impacteur (I) dans la matière du vêtement ou équipement.

15. Procédé selon l'une des revendications 1 à 10 et 13 ou 14 prise dans la dépendance d'une des revendications 1 à 10, **caractérisé en ce que** les vêtements et équipements de protection sont choisis dans le groupe comprenant les jambières, les protège-cuisse, les gilets, et les protège-épaule, les manchettes.

## Patentansprüche

1. Verfahren zum Entwerfen eines Kleidungsstücks oder einer Körperschutzausrüstung für Ordnungskräfte, das folgende Schritte umfasst:
- Ausrüsten einer Modellpuppe (M) mit einem Satz von kinematischen und/oder dynamometrischen Sensoren,
- Anordnen einer Vorrichtung zur Anwendung von Stößen (I), derart, dass diese Vorrichtung Stöße gemäß einer festgelegten reproduzierbaren Kinematik auf mindestens einen vorbestimmten Zielbereich der Modellpuppe (M) anwenden kann,
- Anwenden der Stöße auf den Zielbereich der Modellpuppe (M) ohne Kleidung oder Schutzausrüstung, und Ablesen der durch den Sensor oder die Sensoren, die sich im Bereich der Zielbereiche befinden, übermittelten Messungen,
wobei das Verfahren zudem **dadurch gekennzeichnet ist, dass** es folgende zusätzliche Schritte umfasst:
- Anbringen eines Kleidungsstücks oder einer Schutzausrüstung auf der Modellpuppe (M), so dass sie den Zielbereich bedeckt,
- Anwenden der Stöße auf den Zielbereich der Modellpuppe (M) mit dem Kleidungsstück oder der Schutzausrüstung, und Ablesen der durch den Sensor oder die Sensoren übermittelten Messungen,
- Ableiten von mindestens einem Wert von absorbierter Energie und/oder Kraftdämpfung durch das Kleidungsstück oder die Schutzausrüstung aus den Messungen, und
- wenn der Wert bzw. die Werte größer als die Schwellenwerte ist bzw. sind, Bestimmen des Kleidungsstücks oder der Schutzausrüstung als akzeptabel im Sinne der Schwellenwerte,
- andernfalls, Vornehmen von strukturellen Änderungen am Kleidungsstück oder an der Schutzausrüstung, um die Werte von absorbierter Energie und/oder Kraftdämpfung zu verbessern.

2. Prüfverfahren zur Genehmigung eines Kleidungsstücks oder einer Körperschutzausrüstung für Ordnungskräfte, das folgende Schritte umfasst:
- Ausrüsten einer Modellpuppe (M) mit einem Satz von kinematischen und/oder dynamometrischen Sensoren,
- Anordnen einer Vorrichtung zur Anwendung von Stößen, so dass diese Vorrichtung die Stöße gemäß einer festgelegten wiederholbaren Kinematik auf mindestens einen vorbestimmten Zielbereich der Modellpuppe (M), der durch das zu prüfende Kleidungsstück oder die Ausrüstung schützbar ist, anwenden kann,
- Anwenden der Stöße auf den Zielbereich der Modellpuppe (M) ohne die zu prüfende Kleidung oder Ausrüstung, und Ablesen der durch den Sensor oder die Sensoren, die sich im Bereich der Zielbereiche befinden, übermittelten Messungen,
wobei das Verfahren zudem **dadurch gekennzeichnet ist, dass** es folgende zusätzliche Schritte umfasst:
- Anbringen des zu prüfenden Kleidungsstücks oder der Ausrüstung an der Modellpuppe (M), so dass es den Zielbereich bedeckt,
- Anwenden der Stöße auf den Zielbereich der Modellpuppe (M), der mit dem Kleidungsstück oder der Ausrüstung ausgestattet ist, und Ablesen der durch den Sensor bzw. die Sensoren übermittelten Messungen;
- Ableiten von mindestens einem Wert von absorbierter Energie und/oder Kraftdämpfung durch das Kleidungsstück oder die Schutzausrüstung aus den Messungen, und
- wenn der Wert bzw. die Werte größer als Schwellenwerte ist bzw. sind, das Kleidungsstück oder die Ausrüstung als genehmigt bestimmen.

3. Verfahren nach einem der Ansprüche 1 und 2, **dadurch gekennzeichnet, dass** es zudem einen Schritt zur Bestimmung der Schwellenwerte als Funktion von numerischen Daten umfasst, die die Beziehung zwischen den Traumata und Kraft- und/oder Energiewerten, die direkt auf die bestimmten Bereiche des menschlichen Körpers ausgeübt werden, widerspiegeln.

4. Verfahren nach einem der Ansprüche 1 bis 3, **dadurch gekennzeichnet, dass** die Stöße mittels eines schrägen Fadenpendels (P), das einen Träger (S) für einen Stoßkörper (I) trägt, angewandt werden.

5. Verfahren nach Anspruch 4, **dadurch gekennzeichnet, dass** der Träger (S) mindestens einen kinematischen oder dynamometrischen Sensor aufweist.

6. Verfahren nach einem der Ansprüche 1 bis 5, **dadurch gekennzeichnet, dass** die durch den Sensor bzw. die Sensoren übermittelten Messungen aus einer Gruppe ausgewählt sind, die Messungen von Verschiebung, Geschwindigkeit, Beschleunigung, Kräften und ihrer Entwicklung in Abhängigkeit von der Zeit umfasst.

7. Verfahren nach einem der Ansprüche 1 bis 6, **dadurch gekennzeichnet, dass** die Stöße mit einem Stoßkörper (I), der eine Form ausgewählt aus abgerundeten oder scharfkantigen Formen aufweist, angewandt werden.

8. Verfahren nach Anspruch 7, **dadurch gekennzeichnet, dass** die Stöße in mindestens zwei unterschiedlichen Einfallswinkeln ausgeübt werden.

9. Verfahren nach Anspruch 8, **dadurch gekennzeichnet, dass** einer der Einfälle im Allgemeinen orthogonal zur Oberfläche der Modellpuppe (M) im Bereich des Ziels ist.

10. Verfahren nach einem der Ansprüche 1 bis 9, **dadurch gekennzeichnet, dass** die Stöße auf die Modellpuppe (M) in mehreren unterschiedlichen Haltungen davon ausgeübt werden.

11. Verfahren nach einem der Ansprüche 1 bis 10, **dadurch gekennzeichnet, dass** bei einer Bein-Schutzausrüstung (J) das mit einem Schuh versehene Bein der Modellpuppe (M) auf eine realistische Testfläche gestellt wird, um die Reibungskräfte zwischen der Modellpuppe (M) und dem Boden zu simulieren.

12. Verfahren nach Anspruch 11, **dadurch gekennzeichnet, dass** die Modellpuppe (M) eine Teilpuppe mit mindestens einem gelenkigen Bein ist, das mit einem Schuh versehen und unter dem ein Gewicht befestigt ist, um sich auf der Testfläche, die einen realen Boden nachbildet, zu stehen.

13. Verfahren nach einem der Ansprüche 1 bis 12, **dadurch gekennzeichnet, dass** die Stöße mit einem Stoßkörper (I), der mit einer scharfen Kante versehen ist, ausgeübt werden.

14. Verfahren nach Anspruch 13, **dadurch gekennzeichnet, dass** es die Messung des Eindrückens des Stoßkörpers (I) in das Material der Kleidung oder Ausrüstung umfasst.

15. Verfahren nach einem der Ansprüche 1 bis 10 und 13 oder 14 in Abhängigkeit von einem der Ansprüche 1 bis 10, **dadurch gekennzeichnet, dass** die Kleidungsstücke und Schutzausrüstungen ausgewählt sind aus der Gruppe, die Beinschienen, Oberschenkelschützer, Westen, Schulterschützer, Manschetten umfasst.

## Claims

1. Method for designing clothing or equipment for protecting the body for law enforcement officers, comprising the following steps:
- provide a dummy (M) with a set of cinematic and/or load sensors,
- position an impact application device (I) in such a way that the latter can apply on at least one predetermined target zone of the dummy (M) impacts according to a determined reproducible cinematic,
- apply said impacts on the target zone of the dummy (M) which is not provided with protective clothing or equipment, and take the measurements provided by the sensor(s) located in the region of said target zones,
said method being further **characterized in that** it comprises the supplementary following steps:
- mount a protective clothing or equipment on the dummy (M)in such a way that it covers the target zone,
- apply said impacts on the target zone of the dummy (M) provided with the protective clothing or equipment, and take the measurements provided by said sensor(s),
- deduct from the measurements at least one value of absorbed energy and/or force attenuation by said protective clothing or equipment, and
- if said value(s) is/are higher than threshold values, tag the clothing or equipment as acceptable in the sense of said thresholds,
- otherwise, make structural modifications to said protective clothing or equipment in order to improve said values of absorbed energy and/or force attenuation.

2. Method of test homologating a clothing or equipment for protecting the body for law enforcement officers, comprising the following steps:
- provide a dummy (M) with a set of cinematic and/or load sensors,
- position an impact application device in such a way that the latter can apply on at least one predetermined target zone of the dummy (M), likely to be protected by the clothing or equipment to be tested, impacts according to a determined reproducible cinematic,
- apply said impacts on the target zone of the dummy (M) which is not provided with protective clothing or equipment to be tested, and take the measurements provided by the sensor(s) located in the region of said target zones,
- the method being further **characterised in that** it comprises the following supplementary steps:
- mount the protective clothing or equipment to be tested on the dummy(M)in such a way that it covers the target zone,
- apply said impacts on the target zone of the dummy (M) provided with said clothing or equipment, and take the measurements provided by said sensor(s),
- deduct from the measurements at least one value of absorbed energy and/or force attenuation by said protective clothing or equipment, and
- if said value(s) are higher than threshold values, tag the clothing or equipment as homologated.

3. Method according to one of claims 1 and 2, **characterised in that** it further comprises a step of determining said threshold values according to numerical data reflecting the relation between traumatisms and values of force and/or energy applied directly on the determined zones of the human body.

4. Method according to one of claims 1 to 3, **characterised in that** the impacts are applied using a straight-wire pendulum (P) bearing a support (S) for an impactor (I).

5. Method according to claim 4, **characterised in that** the support (S) comprises at least one cinematic or load sensor.

6. Method according to one of claims 1 to 5, **characterised in that** the measurements provided by the sensor(s) are chosen from a group including displacement measurements, speed measurements, acceleration measurements, force measurements, and their changes according to time.

7. Method according to one of claims 1 to 6, **characterised in that** the impacts are applied with an impactor (I) having a form chosen among the rounded forms and the sharp edged forms.

8. Method according to claim 7, **characterised in that** the impacts are applied according to at least two different angles of incidence.

9. Method according to claim 8, **characterised in that** one of the incidences is generally orthogonal to the surface of the dummy (M) at the level of the target.

10. Method according to one of claims 1 to 9, **characterised in that** the impacts are applied on the dummy (M)in several different postures thereof.

11. Method according to one of claims 1 to 10, **characterised in that**, for a protective equipment of the shin pad type (J), the leg of the dummy (M) provided with a shoe is placed on a realistic test surface in such a way as to simulate the frictional forces between the dummy (M) and the ground.

12. Method according to claim 11, **characterised in that** the dummy (M) is a partial dummy with at least one articulated leg provided with a shoe and subjected to a weight in order to press against a test surface reproducing an actual ground.

13. Method according to one of claims 1 to 12, **characterised in that** the impacts are applied with an impactor (I) provided with a sharp edge.

14. Method according to claim 13, **characterised in that** it comprises the measuring of the sinking of the impactor(I) into the material of the clothing or equipment.

15. Method according to one of claims 1 to 10 and 13 or 14 taken in the dependency of one of claims 1 to 10, **characterised in that** the clothing and equipment for protecting are chosen from the group comprising shin pads, thigh pads, vests, and shoulder pads, arm guards.
